# EUROPEAN PATENT APPLICATION

(11) **EP 3 955 585 A1**
(43) Date of publication of application: **16.02.2022**
(21) Application number: 20920756.2
(22) Date of filing: 01.12.2020
(51) Int. Cl.: H04N 21/472, H04N 21/435, H04N 21/845

(54) **VIDEO PROCESSING METHOD AND APPARATUS, AND ELECTRONIC DEVICE AND STORAGE MEDIUM**

(30) Priority: 30.06.2020 CN 202010610290
(71) Applicant: Baidu Online Network Technology (Beijing) Co., Ltd, Beijing 100085 (CN)
(72) Inventor: LI, Zizhao, Beijing 100085 (CN); SONG, Kun, Beijing 100085 (CN)
(74) Representative: Maiwald Patent- und Rechtsanwaltsgesellschaft mbH
(86) International application number: PCT/CN2020/133172
(87) International publication number: WO 2022/000983

(57) **Abstract**

A method and an apparatus for processing a video, an electronic device and a storage medium are disclosed, which relates to a field of artificial intelligence(AI) and a field of video production and editing. The detailed implementation scheme includes: editing an original video file through a video editor, and generating a target video file by adding a vibration event in the original video file, in which the vibration event comprises a time point and a vibration parameter corresponding to the time point; and sending the target video file to a target server to cause a user triggering a sensor of a terminal device to vibrate in response to the vibration event during a process of the terminal device playing the target video file. In the present disclosure, a viewer may have an immersive experience when watching a video on a client, which greatly improves the user experience of watching a video.

## Description

### TECHNICAL FIELD

The present disclosure relates to a field of data processing, specifically to a field of artificial intelligence(AI) and a field of video production and editing, and particularly to a method and an apparatus for processing a video, an electronic device and a storage medium.

### BACKGROUND

With rapid development of Internet, short videos and live streaming have gradually been a part of people's life. In the related art, the current popular short videos and live streaming are represented in a combination of a video and an audio. However, the representation form of the video is too monotonous. A user is generally distracted or lack of concentration when watching the video file for a long time. Therefore, an immersive experience of a viewer watching a video on a client becomes an urgent problem to be solved.

### SUMMARY

The present disclosure provides a method and an apparatus for processing a video, an electronic device and a storage medium.

According to a first aspect of the present disclosure, a method for processing a video is provided. The method includes: editing an original video file through a video editor, and generating a target video file by adding a vibration event in the original video file, in which the vibration event comprises a time point and a vibration parameter corresponding to the time point; and sending the target video file to a target server to cause a user triggering a sensor of a terminal device to vibrate in response to the vibration event during a process of the terminal device playing the target video file.

According to a second aspect of the present disclosure, another method for processing a video is provided. The method includes: obtaining a target video file containing a vibration event sent by a server, wherein the vibration event comprises a time point and a vibration parameter corresponding to the time point; playing the target video file, and triggering, when the target video file is played at the time point, a sensor of a terminal device to vibrate according to the vibration parameter corresponding to the time point in response to the vibration event.

According to a third aspect of the present disclosure, an apparatus for processing a video is provided. The apparatus includes: an adding module, configured to edit an original video file through a video editor, and generate a target video file by adding a vibration event in the original video file, wherein the vibration event comprises a time point and a vibration parameter corresponding to the time point; a sending module, configured to send the target video file to a target server to cause a user triggering a sensor of a terminal device to vibrate in response to the vibration event during a process of the terminal device playing the target video file.

According to a fourth aspect of the present disclosure, another apparatus for processing a video is provided. The apparatus includes: an obtaining module, configured to obtain a target video file containing a vibration event sent by a server, wherein the vibration event comprises a time point and a vibration parameter corresponding to the time point; a playing module, configured to play the target video file; and a vibration response module, configured to trigger, when the target video file is played at the time point, a sensor of a terminal device to vibrate according to the vibration parameter corresponding to the time point in response to the vibration event.

According to a fifth aspect of the present disclosure, an electronic device is provided. The device includes: at least one processor; and a memory communicatively coupled to the at least one processor; in which, the memory stores instructions executable by the at least one processor, and when the instructions are executed by the at least one processor, the at least one processor is caused to execute the method for processing a video as described in the first aspect.

According to a sixth aspect, a non-transitory computer-readable storage medium storing computer instructions is provided, in which when the computer instructions are executed by a computer, the computer is caused to execute a method for processing a video as described in the first aspect.

According to the scheme of the present disclosure, an original video file may be edited through a video editor, and a vibration event is added in the original video file to generate a target video file, and the target video file is sent to a target server so that a user triggers a sensor of a terminal device to vibrate in response to the vibration event during a process of playing the target video file. In this way, a viewer may have an immersive experience when watching a video on a client, which greatly improves the user experience of watching a video.

It should be understood that, the content described in the part is not intended to recognize key or important features of embodiments of the present disclosure, nor intended to limit the scope of the present disclosure. Other features of the present disclosure will be easy to understand through the following specification.

### BRIEF DESCRIPTION OF THE DRAWINGS

The drawings are intended to better understand the solution, and do not constitute a limitation to the disclosure.
FIG. 1 is a flowchart illustrating a method for processing a video according to one embodiment of the present disclosure;
FIG. 2 is a flowchart illustrating a method for processing a video according to another embodiment of the present disclosure;
FIG. 3 is a flowchart illustrating a method for processing a video according to another embodiment of the present disclosure;
FIG. 4 is a flowchart illustrating a method for processing a video according to another embodiment of the present disclosure;
FIG. 5 is a block diagram illustrating a structure of an apparatus for processing a video according to one embodiment of the present disclosure;
FIG. 6 is a block diagram illustrating a structure of an apparatus for processing a video according to another embodiment of the present disclosure;
FIG. 7 is a block diagram illustrating a structure of an apparatus for processing a video according to another embodiment of the present disclosure;
FIG. 8 is a block diagram illustrating an electronic device configured to implement a method for processing a video in embodiments of the present disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope and spirit of the present disclosure. Similarly, for clarity and conciseness, descriptions of well-known functions and structures are omitted in the following descriptions.

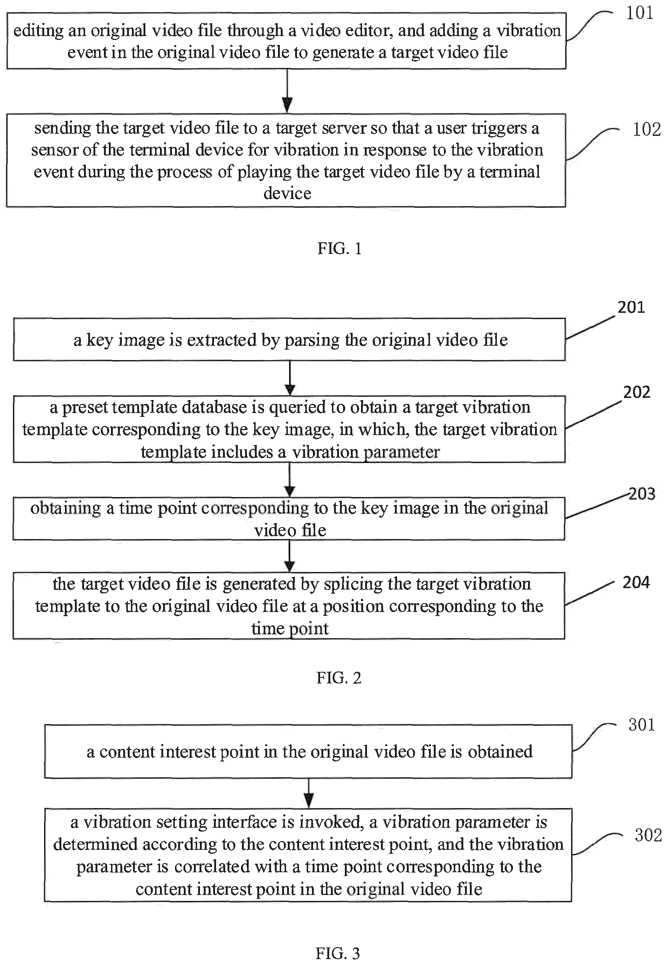

FIG. 1 is a flowchart illustrating a method for processing a video according to one embodiment of the present disclosure. It should be noted that, the method for processing a video in the embodiment of the present disclosure may be applied to an apparatus for processing a video in the embodiment of the present disclosure, and the apparatus for processing a video may be configured on an electronic device. The electronic device may be a mobile terminal, and the mobile terminal may be a mobile phone, a tablet computer, a personal digital assistant and other hardware devices with various operating systems.

As illustrated in FIG. 1, the method for processing a video may include the following blocks.

At block 101, an original video file is edited through a video editor, and a target video file os generated by adding a vibration event in the original video file, in which the vibration event includes a time point and a vibration parameter corresponding to the time point.

It should to be noted that, the method for processing a video in the embodiment of the present disclosure may be applied to an electronic device with a video editor, in which, the video editor may provide a video access interface for the user. When the user wants to add a vibration effect on a certain video, a video editor may obtain an original video file to be processed provided by the user. That is, the original video file may be provided by the user, and a video editor may be configured to add a vibration event on the original video file so that the generated video has a vibration effect.

In the embodiment of the present disclosure, when an original video file is edited through a video editor, a vibration event may be added in the original video file to generate a target video file. The method for adding the vibration event may be that, a video editor on the electronic device analyzes the content of the original video file using AI technology to obtain special element information in the original video file, a corresponding vibration event is added based on the special element information so that the processed video file has a vibration effect. In addition, the vibration event may be manually added by the user, that is, the user adds a vibration event at one or more certain positions of the original video file as required. Therefore, the generated target video file contains a video content of the original video file and a vibration event.

At block 102, the target video file is sent to a target server to cause a user triggering a sensor of a terminal device to vibrate in response to the vibration event during a process of the terminal device playing the target video file.

In the embodiment of the present disclosure, after a target video file is generated, the target video file may be uploaded to a target server. In this way, when other users download a target video file on a target server and play the target video file through a terminal device to the time point included in the vibration event, a sensor of a terminal device is triggered to vibrate according to the vibration parameter corresponding to the time point in response to the vibration event.

In order to improve efficiency and simplify operating procedures of the user, AI technology may be adopted to analyze the content of the original video file to obtain special element information in the original video file, a corresponding vibration event may be added based on the special element information. Specifically, in some embodiments of the present disclosure, as illustrated in FIG. 2, the specific implementation process of adding a vibration event in the original video file to generate a target video file may include followings.

At block 201, a key image is extracted by parsing the original video file.

In at least one embodiment, the key frame is extracted from the original video file, and an image recognition model is used to recognize the key frame in the original video file. For example, in a horror video, a sudden vibration may instantly enhance the degree of horror. Based on the requirement, a key frame is extracted from the original video file and image recognition is performed on the key frame to extract a horror image present in the original video file.

For another example, in a video class or an on-line training and other types of videos, the viewer is reminded to be concentrated on the video by vibration, for example, for educational highlights, the viewer needs to concentrate on watching, therefore, through the voice or video display content in the original video file, the key image(s) in the original video file may be determined, so that a vibration event may be added in the key image to remind the viewer to focus on the video content through vibration when watching the video.

At block 202, a preset template database is queried to obtain a target vibration template corresponding to the key image, in which, the target vibration template includes a vibration parameter.

In at least one embodiment, after a key image is extracted from the original video file, a preset template database may be queried to obtain a target vibration template corresponding to the key image.

It should to be noted that, the template database may be set on the electronic device. In some embodiments, the template database may be integrated in the video editor, in which, the template database includes an inherent vibration template provided by a device supplier, and/or a custom vibration template set by a user by selecting a control parameter. In the embodiment of the present disclosure, a vibration template may include a vibration parameter. The vibration parameter may include but not limited to one or more of vibration times, time interval between vibrations, time duration of each vibration, etc.

In the embodiment of the present disclosure, each type of key image may correspond to at least one vibration template, and the vibration parameters in each vibration template are different. In this way, after a key image in the original video file is obtained, a preset template database may be queried to obtain a target vibration template corresponding to the key image. Taking adding a vibration event in a horror video for an example, assuming that there are five horror levels, each level corresponds to one vibration template, in this way, after a key image of the horror video is obtained, a level of the key image may be determined, and a vibration template corresponding to the level of the key image may be determined from a template database. Therefore, different vibration events may be added into the original video file based on different levels of the key images, and a corresponding vibration effect may be added based on the video content, which may greatly enhance the experience of watching a video by the user.

It may be understood that, for a video class or an on-line lecture video, different vibration templates may be obtained according to a key level of the explanation content, a corresponding vibration effect may be added at the corresponding position in the original video file, which may remind the viewer to concentrate.

At block 203, a time point corresponding to the key image in the original video file is obtained.

That is, a time point corresponding to the original video file in the key image may be obtained. For example, taking adding a vibration event in the horror video as an example, when a certain horror image in the horror video is extracted, a playback time point corresponding to the horror image in the horror video may be obtained and taken as a position of adding the vibration event in the original video file.

At block 204, the target video file is generated by splicing the target vibration template to the original video file at a position corresponding to the time point.

That is, when a key image in the original video file and a time point corresponding to the original video file in the key image are obtained, a target vibration template corresponding to the key image may be integrated with the original video file, for example, a trigger label of a vibration event may be added at the time point, and the original video file in which the trigger label of a vibration event is added and the target vibration template may be integrated into a file, to obtain a target video file with the vibration effect.

Therefore, AI technology may be adopted to analyze the content of the original video file to obtain special element information in the original video file, a corresponding vibration event is added based on the special element information, which may simplify operating procedures of the user, and enhance efficiency and implement intelligence of processing a video.

In order to further improve the user experience and meet the user's personalized needs, the user may select a position to add the vibration event in the video as required. In some embodiments of the present disclosure, as illustrated in FIG. 3, the specific implementation process of adding a vibration event in the original video file to generate a target video file may include followings.

At block 301, a content interest point in the original video file is obtained.

In at least one embodiment, the respective frames of the original video file may be extracted through a video editor and displayed to the user. The user may select which frames of content in the original video file they are interested in according to his/her own requirement.

At block 302, a vibration setting interface is invoked, a vibration parameter is determined according to the content interest point, and the vibration parameter is correlated with a time point corresponding to the content interest point in the original video file.

In at least one embodiment, after a content interest point of the user in the original video file is obtained, a vibration setting interface may be enhanced for the user, and a vibration parameter may be selected according to the content interest point. After it is determined that the user selects a vibration parameter, the vibration parameter selected by the user may be set in association with a time point corresponding to the content interest point in the original video file, thereby generating a target video file with a vibration effect.

Therefore, the user may select a position to add a vibration event in the video according to his/her own requirement, and further add a vibration event at the position, such that an editing function of adding a vibration effect in the video may be provided to the user, and the user has the ability to edit a vibration method for the video, which may meet the personalized requirement of the user further to improve the user experience.

It should to be noted that, the original video in the embodiment of the present disclosure may be a short video or other videos, or a real-time video streaming timely uploaded to a live streaming server in the live streaming. That is, the method for processing a video in the embodiment of the present disclosure may be further applied in a video live streaming scene, for example, a video editor is embedded in a live streaming application, so that when the anchor wants to conduct a new interaction with the user in the live streaming application by pushing a vibration, the anchor may add a vibration template at a certain moment of the live streaming through a video editor in the live streaming application, and the electronic device may obtain a real-time video streaming when obtaining the anchor's live streaming, and determine a time point corresponding to the real-time video streaming at the moment as a position of adding the vibration event, and set the vibration template in association with the adding position, and associate a real-time video streaming of the vibration template to be uploaded to a target server. The user watching a live streaming obtains a real-time video streaming on the target server through the terminal device, and plays a real-time video streaming of the live streaming. When it is played to the time point adding a vibration event, a sensor of a terminal device is triggered for vibration according to the vibration parameter in the vibration event to achieve the effect of pushing a vibration to audiences in the live streaming. In this way, when the audiences watch the anchor's live streaming through a terminal device, the terminal device may pull traffic from a live streaming server and play a real-time video streaming corresponding to the live streaming from the server. When the video streaming is played to the corresponding position of adding the corresponding vibration time (with a time point of a vibration event added), a sensor of a terminal device is triggered for vibration to achieve the effect of pushing a vibration to audiences in the live streaming.

According to the method for processing a video in the embodiment of the present disclosure, an original video file is edited through a video editor, a vibration event in the original video file may be added to generate a target video file and the target video file is sent to a target server so that a user triggers a sensor of a terminal device to vibrate in response to the vibration event during a process of playing the target video file. For a video editor, a complete new editing method is added. A vibration may be added to better represent a video of the editor, and a vibration may be added in the live streaming to interact with audiences better. For video audiences, a new watching feeling is added, and when watching videos and live streaming, a four-dimensional effect is simulated through feeling vibration of the terminal device, so that the viewer may have an immersive experience when watching a video on a client and realize the content of the video better, which greatly improves the experience of watching a video.

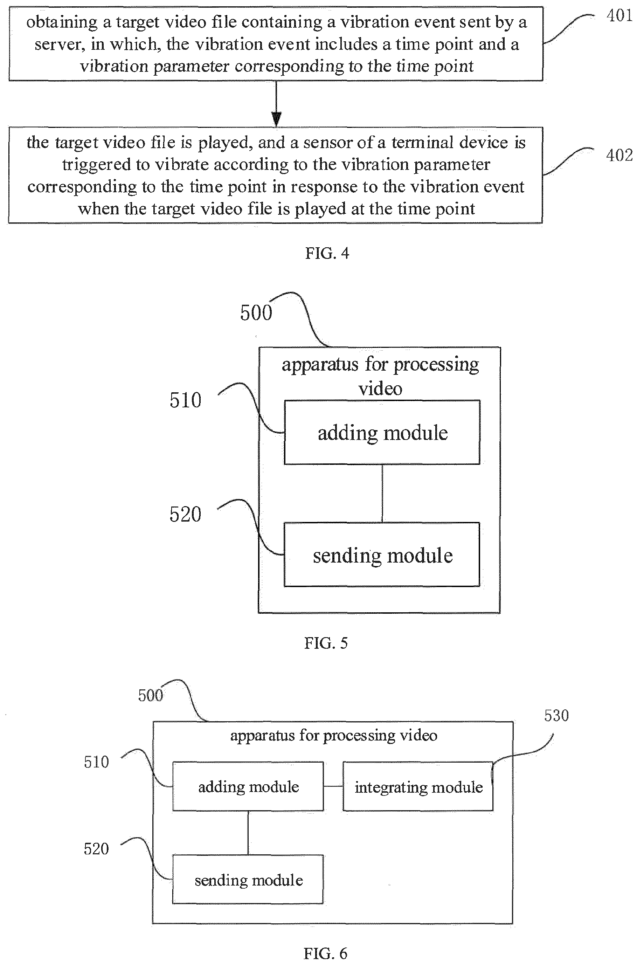

FIG. 4 is a flowchart illustrating a method for processing a video according to another embodiment of the present disclosure. As illustrated in FIG. 4, the method for processing a video may include the following blocks:
At block 401, a target video file containing a vibration event sent by a server is obtained, in which, the vibration event includes a time point and a vibration parameter corresponding to the time point.

For example, the viewer may obtain a target video file containing the vibration event from the server through a terminal device. The target video file may be a short video file, and further may be a real-time video streaming file of the live streaming.

In the embodiment of the present disclosure, the above target video file may be a video file obtained after the original video file is edited in the method for processing a video as illustrated in FIG. 1 to FIG. 3. The target video file contains a vibration event, and the vibration event includes a time point and a corresponding vibration parameter. The vibration parameter may include but not limited to one or more of vibration times, time interval between vibrations, time duration of each vibration, etc.

At block 402, the target video file is played, and a sensor of a terminal device is triggered to vibrate according to the vibration parameter corresponding to the time point in response to the vibration event when the target video file is played at the time point.

That is, when a target video file is obtained, the target video file may be played. When the video is played to the position of the vibration event during the playing process, the vibration event is triggered while playing the original content of the video file, and the sensor of the terminal device is triggered to vibrate according to the vibration parameter corresponding to the vibration event on the position. In the embodiment of the present disclosure, the sensor may be a vibration sensor.

According to the method for processing a video in the embodiment of the present disclosure, a vibration event may be added in the original video file, so that when the video is played to a position of the added vibration event, a vibration behavior corresponding to the content is displayed to the user while playing the original content of the video. For a video editor, a complete new editing method is added. A vibration may be added to better represent a video of the editor, and a vibration may be added in the live streaming to interact with audiences better. For video audiences, a new watching feeling may be provided, and when watching videos and live streaming, a four-dimensional effect is simulated through vibration of the terminal device, a viewer may have an immersive experience when watching a video on a client, which greatly improves the user experience of watching a video.

In order to achieve the above embodiments, the disclosure further provides an apparatus for processing a video.

FIG. 5 is a block diagram illustrating a structure of an apparatus for processing a video according to one embodiment of the present disclosure. The apparatus 500 for processing a video may include an adding module 510 and a sending module 520.

Specifically, the adding module 510 is configured to edit an original video file through a video editor, and generate a target video file by adding a vibration event in the original video file, in which the vibration event comprises a time point and a vibration parameter corresponding to the time point.

The sending module 520 is configured to send the target video file to a target server to cause a user triggering a sensor of a terminal device to vibrate in response to the vibration event during a process of the terminal device playing the target video file.

In some embodiments of the present disclosure, the adding module 510 is specifically configured to extract a key image by parsing the original video file; query a preset template database to obtain a target vibration template corresponding to the key image, wherein the target vibration template comprises a vibration parameter; obtain a time point corresponding to the key image in the original video file; and generate the target video file by splicing the target vibration template to the original video file at a position corresponding to the time point..

In the embodiment of the present disclosure, as illustrated in FIG. 6, the apparatus 500 for processing a video may further include an integrating module 530. The integrating module 530 is configured to integrate the template database into the video editor, in which the template database includes an inherent vibration template provided by a device supplier, and/or a custom vibration template set by the user selecting a control parameter.

In some embodiments of the present disclosure, the adding module 510 is specifically configured to obtain a content interest point in the original video file; and invoke a vibration setting interface, determine a vibration parameter according to the content interest point, and correlate the vibration parameter with a time point corresponding to the content interest point in the original video file.

According to the apparatus for processing a video in the embodiment of the present disclosure, an original video file is edited through a video editor, a vibration event in the original video file may be added to generate a target video file and the target video file is sent to a target server so that a user triggers a sensor of a terminal device to vibrate in response to the vibration event during a process of playing the target video file. For a video editor, a complete new editing method is added. A vibration may be added to better represent a video of the editor, and a vibration may be added in the live streaming to interact with audiences better. For video audiences, a new watching feeling is added, and when watching videos and live streaming, a four-dimensional effect is simulated through feeling vibration of the terminal device, so that the viewer may have an immersive experience when watching a video on a client and realize the content of the video better, which greatly improves the experience of watching a video.

In order to achieve the above embodiments, the disclosure further provides another apparatus for processing a video.

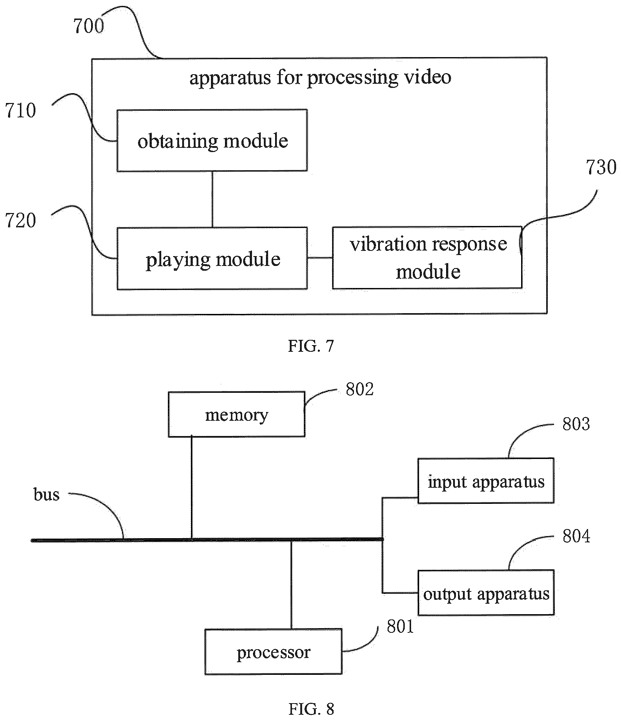

FIG. 7 is a block diagram illustrating a structure of an apparatus for processing a video according to another embodiment of the present disclosure. The apparatus 700 for processing a video may include an obtaining module 710, a playing module 720 and a vibration response module 730.

Specifically, the obtaining module 710 is configured to obtain a target video file containing a vibration event sent by a server, wherein the vibration event comprises a time point and a vibration parameter corresponding to the time point.

The playing module 720 is configured to play the target video file.

The vibration response module is configured to trigger, when the target video file is played at the time point, a sensor of a terminal device to vibrate according to the vibration parameter corresponding to the time point in response to the vibration event. According to the apparatus for processing a video in the embodiment of the present disclosure, a vibration event may be added in the original video file, so that when the video is played to a position of the added vibration event, a vibration behavior corresponding to the content is displayed to the user while playing the original content of the video. For a video editor, a complete new editing method is added. A vibration may be added to better represent a video of the editor, and a vibration may be added in the live streaming to interact with audiences better. For video audiences, a new watching feeling may be provided, and when watching videos and live streaming, a four-dimensional effect is simulated through vibration of the terminal device, a viewer may have an immersive experience when watching a video on a client, which greatly improves the user experience of watching a video.

According to embodiments of the present disclosure, an electronic device and a readable storage medium are further provided in the embodiment.

FIG. 8 is a block diagram illustrating an electronic device configured to implement a method for processing a video in embodiments of the present disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 8, the electronic device includes one or more processors 801, a memory 802, and interfaces configured to connect various components including a high-speed interface and a low-speed interface. The various components are connected to each other with different buses, and may be installed on a public main board or installed in other ways as needed. The processor may process instructions executed in the electronic device, including instructions stored in or on the memory to display graphical information of the GUI on an external input/output device (such as a display device coupled to an interface). In other implementations, a plurality of processors and/or a plurality of buses may be configured with a plurality of memories if necessary. Similarly, the processor may connect a plurality of electronic devices, and each device provides a part of necessary operations (for example, as a server array, a group of blade servers, or a multi-processor system). FIG. 8 takes one processor 801 as an example.

A memory 802 is a non-transitory computer-readable storage medium provided in the present disclosure. The memory stores instructions executable by the at least one processor, so that the at least one processor executes a method for processing a video as described in the present disclosure. The non-transitory computer-readable storage medium of the present disclosure stores computer instructions, in which the computer instructions are configured so that a method for processing a video provided in the present disclosure.

As a non-transitory computer-readable storage medium, the memory 802 may be configured to store non-transitory software programs, non-transitory computer-executable programs and modules, such as program instructions/modules corresponding to a method for processing a video in the embodiment of the present disclosure (for example, an adding module 510 and a sending module 520 as illustrated in FIG. 5, or an obtaining module 710, a playing module 720 and a vibration response module 730 as illustrated in FIG. 7). The processor 801 executes various functional applications and data processing of the server by running a non-transitory software program, an instruction, and a module stored in the memory 802, that is, a method for processing a video in the above method embodiment is implemented.

The memory 802 may include a program storage area and a data storage area; the program storage area may store operation systems and application programs required by at least one function; the data storage area may store data created based on the use of an electronic device according to the method for processing a video, etc. In addition, the memory 802 may include a high-speed random access memory, and may also include a non-transitory memory, such as at least one magnetic disk storage device, a flash memory device, or other non-transitory solid-state storage devices. In some embodiments, the memory 802 optionally includes a memory set remotely relative to the processor 801 that may be connected to an electronic device executing a method for processing a video via a network. The example of the above networks includes but not limited to an Internet, an enterprise intranet, a local area network, a mobile communication network and their combination.

An electronic device configured to implement a method for processing a video may further include an input apparatus 803 and an output apparatus 804. The processor 801, the memory 802, the input apparatus 803, and the output apparatus 804 may be connected through a bus or in other ways. FIG. 8 takes connection through a bus as an example.

The input apparatus 803 may receive input digital or character information, and generate a key signal input related to user setting and function control of an electronic device configured to implement a method for processing a video, such as a touch screen, a keypad, a mouse, a track pad, a touch pad, an indicating rod, one or more mouse buttons, a trackball, a joystick and other input apparatuses. The output apparatus 804 may include a display device, an auxiliary lighting apparatus (for example, a LED) and a tactile feedback apparatus (for example, a vibration motor), etc. The display device may include but not limited to a liquid crystal display (LCD), a light emitting diode (LED) display and a plasma display. In some implementations, a display device may be a touch screen.

Various implementation modes of the systems and technologies described herein may be implemented in a digital electronic circuit system, an integrated circuit system, a dedicated ASIC (application specific integrated circuit), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

The computer programs (also called as programs, software, software applications, or codes) include machine instructions of a programmable processor, and may be implemented with high-level procedure and/or object-oriented programming languages, and/or assembly/machine languages. As used herein, the terms "a machine-readable medium" and "a computer-readable medium" refer to any computer program product, device, and/or apparatus configured to provide machine instructions and/or data for a programmable processor (for example, a magnetic disk, an optical disk, a memory, a programmable logic device (PLD)), including a machine-readable medium that receive machine instructions as machine-readable signals. The term "a machine-readable signal" refers to any signal configured to provide machine instructions and/or data for a programmable processor.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), a blockchain network, and an internet.

The computer system may include a client and a server. The client and server are generally far away from each other and generally interact with each other through a communication network. The relation between the client and the server is generated by computer programs that run on the corresponding computer and have a client-server relationship with each other.

According to the technical scheme in the embodiment of the present disclosure, a vibration event may be added in the original video file, so that, when the video is played to a position of adding the vibration event, and an original event of the video is played, a vibration behavior corresponding to the content is displayed to the user. For a video editor, a complete new editing method is added. A vibration may be added to better represent a video of the editor itself, and a vibration may be added in the live streaming to interact with audiences better. For video audiences, a new watching feeling is added, and when videos and live streaming are watched, a four-dimensional effect is simulated through feeling vibration of the terminal device, a viewer may have an immersive experience when watching a video on a client, which greatly improves the user experience of watching a video.

It should be understood that, various forms of procedures shown above may be configured to reorder, add or delete blocks. For example, blocks described in the present disclosure may be executed in parallel, sequentially, or in a different order, as long as the desired result of the technical solution disclosed in the present disclosure may be achieved, which will not be limited herein.

The above specific implementations do not constitute a limitation on the protection scope of the present disclosure. Those skilled in the art should understand that various modifications, combinations, sub-combinations and substitutions may be made according to design requirements and other factors. Any modification, equivalent replacement, improvement, etc., made within the spirit and principle of embodiments of the present disclosure shall be included within the protection scope of embodiments of the present disclosure.

## Claims

1. A method for processing a video, comprising:
editing an original video file through a video editor, and generating a target video file by adding a vibration event in the original video file, wherein the vibration event comprises a time point and a vibration parameter corresponding to the time point; and
sending the target video file to a target server to cause a user triggering a sensor of a terminal device to vibrate in response to the vibration event during a process of the terminal device playing the target video file.

2. The method of claim 1, wherein, generating the target video file by adding the vibration event in the original video file comprises:
extracting a key image by parsing the original video file;
querying a preset template database to obtain a target vibration template corresponding to the key image, wherein the target vibration template comprises a vibration parameter;
obtaining a time point corresponding to the key image in the original video file; and
generating the target video file by splicing the target vibration template to the original video file at a position corresponding to the time point.

3. The method of claim 2, before querying the preset template database, further comprising:
integrating the template database into the video editor, wherein, the template database comprises an inherent vibration template provided by a device supplier, and/or a custom vibration template set by the user selecting a control parameter.

4. The method of claim 1, wherein, generating the target video file by adding the vibration event in the original video file comprises:
obtaining a content interest point in the original video file; and
invoking a vibration setting interface, determining a vibration parameter according to the content interest point, and correlating the vibration parameter with a time point corresponding to the content interest point in the original video file.

5. A method for processing a video, comprising:
obtaining a target video file containing a vibration event sent by a server, wherein the vibration event comprises a time point and a vibration parameter corresponding to the time point;
playing the target video file, and triggering, when the target video file is played at the time point, a sensor of a terminal device to vibrate according to the vibration parameter corresponding to the time point in response to the vibration event.

6. An apparatus for processing a video, comprising:
an adding module, configured to edit an original video file through a video editor, and generate a target video file by adding a vibration event in the original video file, wherein the vibration event comprises a time point and a vibration parameter corresponding to the time point;
a sending module, configured to send the target video file to a target server to cause a user triggering a sensor of a terminal device to vibrate in response to the vibration event during a process of the terminal device playing the target video file.

7. The apparatus of claim 6, wherein, the adding module is specifically configured to:
extract a key image by parsing the original video file;
query a preset template database to obtain a target vibration template corresponding to the key image, wherein the target vibration template comprises a vibration parameter;
obtain a time point corresponding to the key image in the original video file; and
generate the target video file by splicing the target vibration template to the original video file at a position corresponding to the time point.

8. The apparatus of claim 7, further comprising:
an integrating module, configured to integrate the template database into the video editor, wherein, the template database comprises an inherent vibration template provided by a device supplier, and/or a custom vibration template set by the user selecting a control parameter.

9. The apparatus of claim, wherein, the adding module is specifically configured to:
obtain a content interest point in the original video file; and
invoke a vibration setting interface, determine a vibration parameter according to the content interest point, and correlate the vibration parameter with a time point corresponding to the content interest point in the original video file.

10. An apparatus for processing a video, comprising:
an obtaining module, configured to obtain a target video file containing a vibration event sent by a server, wherein the vibration event comprises a time point and a vibration parameter corresponding to the time point;
a playing module, configured to play the target video file; and
a vibration response module, configured to trigger, when the target video file is played at the time point, a sensor of a terminal device to vibrate according to the vibration parameter corresponding to the time point in response to the vibration event.

11. An electronic device, comprising:
at least one processor; and
a memory communicatively coupled to the at least one processor; wherein,
the memory is stored with instructions executable by the at least one processor, and when the instructions are executed by the at least one processor, the at least one processor is caused to execute the method of any one of claims 1 to 5.

12. A non-transitory computer-readable storage medium storing computer instructions, wherein when the computer instructions are executed by a computer, the computer is caused to execute the method of any one of claims 1 to 5.
